# EUROPÄISCHE PATENTSCHRIFT

(11) **EP 2 281 644 B1**
(45) Veröffentlichungstag und Bekanntmachung des Hinweises auf die Patenterteilung: **19.06.2013**
(21) Anmeldenummer: 10172115.7
(22) Anmeldetag: 06.08.2010
(51) Int. Cl.: B21D 39/04, B21D 49/00, B23P 11/00, B60N 2/48

(54) **Kopfstützenträger**
Headrest holder
Support d'appuie-tête

(30) Priorität: 07.08.2009 DE 102009036523; 23.11.2009 DE 102009047020
(43) Veröffentlichungstag der Anmeldung: 09.02.2011
(73) Patentinhaber: Thiel & Hoche GmbH & Co. KG, 40699 Erkrath (DE)
(72) Erfinder: Arcidiacone, Franco, 59846 Sundern (DE)
(74) Vertreter: Kalkoff & Partner

(56) Entgegenhaltungen:
- JP-A- 8 090 126
- US-A1- 2008 083 855

## Beschreibung

Die Erfindung betrifft Kopfstützenträger mit einem Halterohr zur Aufnahme eines Kopfstützelements sowie ein Verfahren zur Herstellung des Kopfstützenträgers und einer Kopfstütze mit einem Kopfstützenträger.

Kopfstützenträger sind überwiegend aus u-förmig gebogenen, zumeist schweißtechnisch aus Bandstahl hergestellten Rohren, nachfolgend Halterohr genannt, gebildet, so dass diese zwei Schenkel mit freien Enden und einen dazwischen angeordneten Verbindungsabschnitt aufweisen, der zur Aufnahme der in der Regel gepolsterten Kopfstütze dient. Mit den aus der Kopfstütze herausragenden Schenkeln dieser Halterohre ist die Kopfstütze an einem Fahrzeugsitz befestigbar, wobei die Schenkel in entsprechenden Aufnahmen an dem Fahrzeugsitz angeordnet sind.

Die Halterohre müssen vorgegebene Festigkeitseigenschaften erfüllen, damit sie auch im Falle eines Fahrzeugunfalls den auftretenden Belastungen Stand halten. Die Intensität der Belastung variiert jedoch über die Länge des Halterohres. So unterliegen in Abhängigkeit von der relativen Position der Kopfstütze gegenüber einem Fahrzeugsitz einzelne Teilbereiche des Halterohres im Crashfall deutlich höheren Belastungen als solche Bereiche, die bspw. im Inneren eines Fahrzeugsitzes angeordnet sind. Eine Auslegung des gesamten Halterohres entsprechend der nur isoliert auftretenden größten Belastung würde zwar eine ausreichende Stabilität gewährleisten, bedingt jedoch einen hohen Materialeinsatz was wiederum zu hohen Kosten führt.

Darüber hinaus unterliegen die Halterohre, damit diese als Kopfstützenträger verwendbar sind, einer Reihe von Umformungsvorgängen, welche zu einer strukturellen Schwächung des Halterohres und somit zu einer Verringerung der Stabilität führen. Im Crashfall stellen die umgeformten Bereiche daher besonders kritische Bereiche dar.

Neben der Herstellung von Biegungen zählt zu den Umformungsvorgängen unter anderem die Einbringung von Rastmarken an zumindest einem Schenkel des Halterohres, so dass die Kopfstütze relativ gegenüber dem Fahrzeugsitz in mehr als einer Position festlegbar ist. Die Rastmarken können bspw. durch Ausnehmungen in Form von Kerben gebildet sein, die in das Halterohr eingebracht sind und mit Rastmitteln am Fahrzeugsitz zusammenwirken. Meist sind mehrere Kerben in Abständen an einem Schenkel angebracht, so dass die Kopfstütze in variablem Abstand zum Fahrzeugsitz positioniert werden kann.

Die Kerben, die sowohl flach, so dass der Kerbgrund in der Rohrwand liegt, als auch tief ausgebildet sein können, so dass der Kerbgrund tiefer als die Rohrwand liegt, führen, ebenso wie andere Umformungsvorgänge, wie das Herstellen von Biegungen, zu einer strukturellen Schwächung des Halterohres.

Die DE 10 2007 033 604 offenbart einen Kopfstützenträger, der bei minimiertem Gewicht den Festigkeitsanforderungen an Kopfstützenträger gerecht wird, der insbesondere in Kraftfahrzeugen eingesetzt werden. Die Rohrwand des Halterrohres weist Abschnitte unterschiedlicher Materialstärke auf. Abschnitte größerer Materialstärke sind dort vorgesehen, wo im Crashfall hohe Belastungen zu erwarten oder Kerben oder Ausnehmungen anzubringen sind. Diese Abschnitte größerer Materialstärke werden beim Walzen des Rohmaterials für die Halterohre erzeugt. In den Abschnitten größerer Materialstärke können die Kerben angebracht sein, die zur Positionierung der fertigen Kopfstütze am Sitz erforderlich sind.

Kopfstützenträger die Halterohre mit unterschiedlichen Wandstärken aufweisen, und bei denen die Ausnehmungen an Abschnitten mit größerer Materialstärke angebracht sind, sind leichter und fester als herkömmliche Kopfstützenträger. Sie verformen sich unter Belastung deutlich weniger als Kopfstützenträger, die durchgehend eine gleiche Wandstärke aufweisen. Allerdings muss bereits vor der Herstellung der Halterohre bekannt sein, wo genau Abschnitte größerer Materialstärke anzuordnen sind. Ferner ist dann sicherzustellen, dass die Halterohre exakt so eingesetzt werden (gebogen oder miteinander verbunden werden), dass dort ausreichende Wandstärke gegeben ist, wo die höchsten Belastungen auftreten, bzw. eine Kerbe oder anderer Umformungen anzubringen sind. Damit fehlt es an der nötigen Einfachheit und Flexibilität bei der Herstellung.

Die DE 197 34 712 offenbart einen rohrförmigen Kopfstützenträger, der durch das Einsetzen eines Drahtabschnitts verstärkt wird.

Das Dokument JP 8 090126, welches alle Merkmale des Oberbegriffs des unabhängigen Anspruchs 1 offenbart, wird als nächstliegender Stand der Technik angesehen.

Der Erfindung liegt die Aufgabe zugrunde, einen Kopfstützenträger und eine Kopfstütze bereitzustellen, die bei einem geringen Gewicht eine hohe Stabilität besitzen.

Die Erfindung löst die Aufgabe durch einen Kopfstützenträger mit den Merkmalen des Anspruchs 1.

Der erfindungsgemäße Kopfstützenträger weist ein Halterohr zur Aufnahme eines Kopfstützelements auf, wobei innerhalb des Halterohres ein Verstärkungselement angeordnet ist. Kennzeichnend für den Kopfstützenträger ist dabei, dass das Verstärkungselement durch einen Hohlkörper, insbesondere eine Hülse gebildet wird.

Gemäß der Erfindung weist das Halterohr des Kopfstützenträgers, der neben dem Halterohr auch weitere Bauteile aufweisen, aber auch nur aus dem Halterohr bestehen kann, abschnittsweise zumindest ein Verstärkungselement auf. Das Verstärkungselement ist dabei innerhalb des Halterohres in einem Bereich angeordnet ist, für den gegenüber dem übrigen Halterohr eine höhere Stabilität gefordert ist.

Die Erfindung weist den Vorteil auf, dass eine strukturelle Verstärkung besonders beanspruchter Bereiche unabhängig von der Herstellung der für die Halterrohre vorgesehenen Rohre erfolgen kann. Dies ermöglicht es für die Halterohre auf Standardrohre zur Herstellung des Kopfstützenträgers zurückzugreifen, was einen erheblichen Kostenvorteil zur Folge hat. Die Verwendung eines oder mehrerer Verstärkungselemente erlaubt die selektive Verstärkung einzelner Bereiche, wobei auch die Verstärkungselemente jeweils entsprechend der zu erreichenden Verstärkung unabhängig voneinander ausgewählt werden können. Es muss kein weit bemessener Abschnitt der Rohrwand verstärkt werden, um verschiedenen Ausführungen gerecht zu werden.

Nach einer Weiterbildung der Erfindung ist das Verstärkungselement im Bereich eines umgeformten Abschnitts des Halterohres angeordnet. Demgemäß ist das Verstärkungselement in einem Bereich des Halterohres angeordnet, der bei der Herstellung des Kopfstützenträgers einem Umformungsprozess, bspw. der Herstellung einer Biegung oder der Einbringung einer Ausnehmung wie einer Kerbe, unterliegt. In der Regel wird das Halterohr aus einem geraden Rohrelement gebildet, welches entsprechend der konstruktiven Vorgaben für den Kopfstützenträger umgeformt wird. Wesentliche Umformungsschritte sind z.B. die Herstellung der Biegungen sowie die Einbringung der Kerben.

Die Anordnung der Verstärkungselemente erfolgt in der Regel vor der Durchführung der Umformungsvorgänge, kann aber auch, sofern technisch möglich, nach der Umformung erfolgen. Im Falle mehrerer unterschiedlicher Umformungen besteht die Möglichkeit, diese selektiv unter Berücksichtigung der jeweils auftretenden Belastungen sowie dem Grad der aus der Umformung resultierenden Schwächung zu verstärken.

Erfindungsgemäß ist das Verstärkungselement durch einen Hohlkörper, insbesondere eine Hülse gebildet. Diese Ausgestaltung der Erfindung ermöglicht es, das Gewicht des Kopfstützenträgers zu reduzieren. Über die Ausgestaltung der Wandstärke des Hohlkörpers, insbesondere der Hülse, kann die erforderliche Verstärkung sehr genau eingestellt werden, so dass das Gewicht nur im erforderlichen Maße erhöht wird. Der Hohlkörper, insbesondere die Hülse lässt sich überdies besonders kostengünstig, bspw. durch Abschneiden einzelner Elemente von einem Rohr, herstellen.

Die Art der Verbindung des Verstärkungselements mit dem Halterohr ist grundsätzlich frei wählbar, wobei dieses beispielsweise mit dem Halterohr verklebt oder verschweißt sein kann. Nach einer Weiterbildung der Erfindung ist das Verstärkungselement jedoch kraft- und/oder formschlüssig mit dem Halterohr verbunden. Diese Verbindung lässt sich besonders einfach realisieren. So kann das Verstärkungselement in das Halterohr eingepasst werden, was neben einer hohen Positionssicherheit zudem den Vorteil aufweist, dass keine zusätzliche, u. U. schwächende Umformung des Halterohres zur Anordnung des Verstärkungselements erforderlich ist.

Die Form des Verstärkungselements kann unter Berücksichtigung der zu erzielenden Verstärkung sowie unter Gewichtsgesichtspunkten frei gewählt werden. So kann das Verstärkungselement beispielsweise eine polygonale, insbesondere vier- oder mehreckige oder elliptische Form aufweisen, die losgelöst von dem Querschnitt des Halterohres an die auftretenden Belastungen angepasst ist.

Nach einer weiteren Ausgestaltung der Erfindung weist das Verstärkungselement jedoch eine an die Form des umgeformten Abschnitts angepasste Form, insbesondere einen an den Querschnitt des umgeformten Bereichs angepassten Querschnitt auf. Gemäß dieser Ausgestaltung der Erfindung entspricht die Kontur des Verstärkungselements der Form des umgeformten Bereiches. Grundsätzlich kann sich die Kontur dadurch ergeben, dass das Verstärkungselement, wie gemäß einer weiteren Ausgestaltung der Erfindung vorgesehen, ebenfalls dem Umformungsprozess des Halterohres unterliegt, in dem das Verstärkungselement vor der Umformung angeordnet ist. Es besteht aber auch die Möglichkeit, ein Verstärkungselement zu verwenden, das zuvor entsprechend der zu erzielenden Umformung ausgebildet wurde. Hierdurch ergibt sich der Vorteil, dass das Verstärkungselement bei der Umformung die Formgebung unterstützt, in dem es als Matrize fungiert.

Die Umformung des Halterohres kann in beliebiger Weise erfolgen, nachdem über das Verstärkungselement eine Kompensation der aus der Umformung resultierenden Schwächung erfolgt. Besonders vorteilhafterweise ist der umgeformte Abschnitt durch spanende und/oder nichtspanende Bearbeitung des Halterohres gebildet ist. Diese Bearbeitungsformen eignen sich insbesondere zur Herstellung von Ausnehmungen, wobei eine spanlose Bearbeitung, z. B. das Prägen hiefür besonders bevorzugt ist, weil hier ohne Verlust gearbeitet werden kann. Vor allem dann, wenn besondere Kerbgeometrien erzeugt werden sollen, können aber auch ohne Weiteres spanende Bearbeitungsverfahren eingesetzt werden.

Das Verstärkungselement kann grundsätzlich an allen umgeformten Bereichen des Halterohres eingesetzt werden. Hierzu zählen auch solche Bereiche, die bspw. zur Anordnung von Anbauteilen mit einer Bohrung, Halterung, Gewinde oder dergleichen versehen sind. Besonders bevorzugt ist das Verstärkungselement jedoch in abgeflachten Bereichen des Halterohres und/oder im Bereich von Biegungen, Einkerbungen oder Ausnehmungen angeordnet, nachdem diese Bereiche insbesondere in einem Crashfall besonders hohen Belastungen unterliegen.

Die Anordnung des erfindungsgemäßen Verstärkungselements kann, wie bereits zuvor dargestellt, sowohl vor als auch nach der Umformung des Halterohres erfolgen. Sofern sich jedoch, wie nach einer vorteilhaften Weiterbildung vorgesehen, die Umformung zur Herstellung des umgeformten Abschnitts auch auf das Verstärkungselement erstreckt, ist zwangsläufig eine vorherige Anordnung im Inneren des Halterrohres erforderlich. Diese Ausgestaltung gewährt eine sichere Anordnung des Verstärkungselements in dem Halterohr, nachdem durch die Mitverformung eine formschlüssige Verbindung erzielt wird. Insofern kann auf eine andere Festlegung des Verstärkungselements am Halterohr verzichtet werden. Ferner wird auch eine gute Kraftübertragung gewährleistet.

Das Verstärkungselement kann an sich an jeder Stelle des Rohres eingesetzt werden, an der Umformungen, z. B. Ausnehmungen vorgesehen sind. Besonders bevorzugt werden die Verstärkungselemente dort eingesetzt, wo Berechnungen zur Belastung zeigen, dass das Material der Rohrwand z.B. nach dem Kerben keine ausreichende Festigkeit gewährleistet. In der Regel ist dies dort der Fall, wo besonders tiefe Ausnehmungen oder Kerben anzubringen sind. Nach einer besonders vorteilhaften Ausführung der Erfindung kann die Ausnehmung die Wand des Rohres so weit verformen, dass sie sich bis in das Verstärkungselement erstreckt oder die Ausnehmung kann die Rohrwand durchsetzen und sich bis in das Verstärkungselement erstrecken. Im Falle der Herstellung einer Kerbe liegt dann der Kerbgrund, die Stelle der tiefsten Einkerbung, in dem Verstärkungselement, das in das Rohr eingesetzt ist. Letzteres ist vor allem dann der Fall, wenn die Ausnehmung durch spanende Bearbeitung erzeugt wird. Die Ausnehmung kann sich aber auch dann in das Verstärkungselement erstrecken, wenn sie durch spanlose Bearbeitung, z. B. durch Prägen erzeugt wird.

Das Verstärkungselement ist in der Regel wie das Halterohr aus Metall hergestellt. Nach einer vorteilhaften Weiterbildung der Erfindung ist das Verstärkungselement jedoch aus einem von dem Material des Halterohres abweichenden Material gebildet. Abweichende Materialien können andere Metalle aber auch andere Werkstoffe wie keramische Werkstoffe, Kunststoffe, faserverstärkte Kunststoffe oder andere Verbundwerkstoffe sein. Die Verwendung abweichender Materialien erlaubt den Einsatz eines breiten Spektrums unterschiedlich ausgestalteter Verstärkungselemente, wodurch eine weitergehende Optimierung hinsichtlich Kosten und Gewicht möglich ist. Auch lassen sich für unterschiedliche Bereiche des Halterohres in Form und Material verschiedenartige Verstärkungselemente verwenden, die den jeweiligen Belastungen angepasst ausgebildet sind.

Diese Ausgestaltung ermöglicht es beispielsweise ein Standard-Rohr im Lager vorzuhalten, in welches das Verstärkungselement aus unterschiedlichem Material eingesetzt wird, je nach dem, wie der Kopfstützenträger auszuführen ist. Das Material kann nach Gewicht, Bearbeitbarkeit oder Festigkeit gewählt werden. Insbesondere kann das Material des Halterohres fester oder dichter als das Material des Verstärkungselements sein. Alternativ kann das Material des Verstärkungselements fester oder dichter als das Material des Halterohres sein.

Beispielsweise kann ein hochfester Werkstoff für das Halterohr gewählt werden, so dass dann leichte Verstärkungselemente im Bereich der Umformungen, bspw. Kerben eingesetzt werden, die nur noch einen geringen Beitrag zur Festigkeit im Bereich der Kerben leisten. Alternativ kann z. B. ein verhältnismäßig weiches Halterohr mit geringer Festigkeit eingesetzt werden, das dann im Bereich der Kerben durch ein besonders festes, versteifend wirkendes Verstärkungselement verstärkt wird.

Das Verstärkungselement, das in das Halterohr eingesetzt wird, kann knapp bemessen sein. Um die Gewichtsersparnis zu minimieren, kann, im Falle einer Ausnehmung, das Verstärkungselement auf 50 % oder die halbe Länge der Ausnehmung bemessen sein. Länge ist hier die Ausdehnung des Halterohres in Längsachse. Bereits mit einem so knapp bemessenen Verstärkungselement kann eine deutliche Verbesserung der Festigkeit des Kopfstützenträgers erreicht werden. Bevorzugt wird jedoch, dass das Verstärkungselement mindestens der Länge der Ausnehmung entspricht.

In einer einfachen Ausführung kann das Verstärkungselement, bspw. die Hülse, einen geschlossenen Umfang aufweisen. Der Radius des Verstärkungselements ist häufig so bemessen, dass das Verstärkungselement im Halterohr verschoben werden kann. Das Verstärkungselement weist jedoch einen Schlitz auf, der sich vorteilhaft in dessen Längsrichtung erstreckt. Im einfachsten Fall ist das Verstärkungselement mit einer Nut versehen, die geringfügig größer ist als die Abmessungen der das Halterohr, bspw. aus einem Bandstahl, bildenden Schweißnaht. Bevorzugt ist es, wenn der Schlitz die Wand einer Hülse vollständig durchsetzt oder wenn er mindestens die Länge des Radius eines Verstärkungselements aufweist.

Das Halterrohr des erfindungsgemäßen Tragelements weist meist eine Schweißnaht auf. Die Schweißnaht reduziert den Durchmesser des Halterohres geringfügig, oft nur um Bruchteile von Millimetern. Diese Reduzierung genügt jedoch, um die ungehinderte Bewegung von Formwerkzeugen, z. B. eines Dorns, zu behindern, welche in das Rohr eingebracht werden, um z. B. eine Umformung wie eine Kerbe zu erzeugen. Außerdem erweist sich die Schweißnaht meist als Bereich verringerter Festigkeit. Kerben können im Bereich der Schweißnaht nicht ohne Weiteres angebracht werden.

Nach der Ausführung der Erfindung fluchtet der Schlitz des Verstärkungselements mit der Schweißnaht. Mit dieser Ausführung sind mehrere Vorteile verbunden: zum einen kann die Schweißnaht als Führung für das Verstärkungselement dienen. Zum anderen verstärkt das Material des Verstärkungselements das Halterohr auch im Bereich der Schweißnaht, so dass eine Umformung, wie z.B. eine Ausnehmung nun ohne Rücksicht auf die Lage der Schweißnaht angebracht werden kann. Schließlich wirkt das Verstärkungselement wie ein Distanzstück, weil sich z. B. ein Dorn nun beim Prägen gegen eine Hülse abstützt und auf deren Innendurchmesser abgestimmt ist. Die Hülse weist keine Schweißnaht auf, so dass der Dorn nach Abschluss des Prägevorgangs störungsfrei aus dem Halterohr herausgefahren werden kann.

Weiter betrifft die Erfindung eine Kopfstütze, die einen Kopfstützenträger nach einem der Ansprüche 1 bis 8 aufweist.

Die Erfindung betrifft auch ein Verfahren zur Herstellung eines Kopfstützenträgers für ein Kopfstützelement mit den Schritten:
- Anordnung eines Verstärkungselements, das als Höhlkörper ausgebildet ist, innerhalb eines Halterohres im Bereich eines umzuformenden Abschnitts des Halterohres und
- Umformung des vorgesehenen Abschnitts.

Das erfindungsgemäße Verfahren ermöglicht das Herstellen des erfindungsgemäßen Kopfstützenträgers mit wenigen Schritten. Unter Verwendung von nur zwei Bauteilen kann dieser individuell und flexibel gefertigt werden, denn die Vorgaben zum Ausrichten des Verstärkungselements und zur Gestaltung der Umformungen, bspw. Ausnehmung können mit wenigen Maßnahmen umgestellt werden.

Die Verfahrensschritte können grundsätzlich in beliebiger Folge durchgeführt werden. In der Regel wird das Ausrichten des Verstärkungselements im Halterohr, also das Positionieren an der Stelle, an der die Umformung durchgeführt, bspw. eine Biegung vorgenommen oder eine Ausnehmung anzubringen ist, unmittelbar im Zusammenhang mit dem Herstellen der Ausnehmung erfolgen. Zwingend ist dies aber nicht. Insbesondere, wenn das Verstärkungselement kraftschlüssig positioniert ist, muss das Anbringen der Kerben nicht gleichzeitig erfolgen.

Wie schon zuvor beschrieben, können zum Herstellen der Ausnehmung spanende oder nichtspanende Werkzeuge eingesetzt werden. Besonders bevorzugt ist das Erzeugen der Kerbe durch Prägen. Hierbei wird ein Dorn in das Halterohr eingeführt, der mit einer Matrize zusammenwirkt, so dass unter Druck die Kerbe spanlos und verlustfrei hergestellt wird. Werden jedoch besondere Kerbengeometrien gewünscht, können sich auch spanende Bearbeitungsverfahren als sinnvoll erweisen.

Nach einer vorteilhaften Ausführung des erfindungsgemäßen Verfahrens wird eine Hülse auf den Dorn aufgesetzt und in das Halterohr eingebracht bis in eine Tiefe, in der sich das Verstärkungselement unter der in die Rohrwand einzubringende Ausnehmung befindet. Das Prägewerkzeug schließt sich um die Rohrwand, übt Druck auf den Dorn aus und eine Kerbe wird geprägt. Der Dorn wird aus dem Halterohr zurückgezogen.

Alternativ kann eine stirnseitig verschlossene Hülse, ein Pfropfen, mittels eines Stempels in einem Halterohr positioniert werden. Die Kerbe wird dann mit einem spanenden Werkzeug hergestellt. Der Stempel wird spätestens nach Herstellung der Kerbe zurückgezogen. Falls der Pfropfen im Halterohr fixiert ist, beispielsweise weil er formschlüssig angeordnet ist, kann der Stempel vor dem Formen der Ausnehmung zurückgezogen werden. Dies beschleunigt die Bearbeitung. Alternativ kann der Stempel den Pfropfen während des Einbringens der Kerbe fixieren, beispielsweise mit einer Klebverbindung, deren Klebkraft schwächer ist als die Verbindung, die durch das Einbringen der Kerbe erzeugt wird. Der Stempel kann dann zurückgezogen werden, nachdem die Kerbe hergestellt ist. Die schwächere Klebverbindung löst sich hier eher als die Verbindung des Pfropfens zum Halterohr.

Ausführungsbeispiele der Erfindung werden nachfolgend mit Bezug auf Zeichnungen näher erläutert. Es zeigen:
- Fig. 1:: eine schematische Darstellung eines Kopfstützenträgers;
- Fig. 2a:: einen schematischen Querschnitt durch einen Kopfstützenträger, ausgeführt als Rohr mit Hülse;
- Fig. 2b:: einen schematischen Querschnitt durch einen Kopfstützenträger, ausgeführt als Rohr mit geschlitzter Hülse;
- Fig. 2c:: einen schematischen, ausschnittsweise dargestellten Querschnitt durch ei- nen Kopfstützenträger;
- Fig. 3:: einen schematischen Querschnitt durch einen Kopfstützenträger, ausgeführt als Halterohr mit stirnseitig verschlossener Hülse, Pfropfen;
- Fig. 4a:: eine Skizze eines Abschnitts eines Halterohres mit einer darin angeordneten kreisförmigen Buchse sowie
- Fig. 4b:: eine Skizze eines Abschnitts eines Halterohres mit einer darin angeordneten eckigen Hülse.

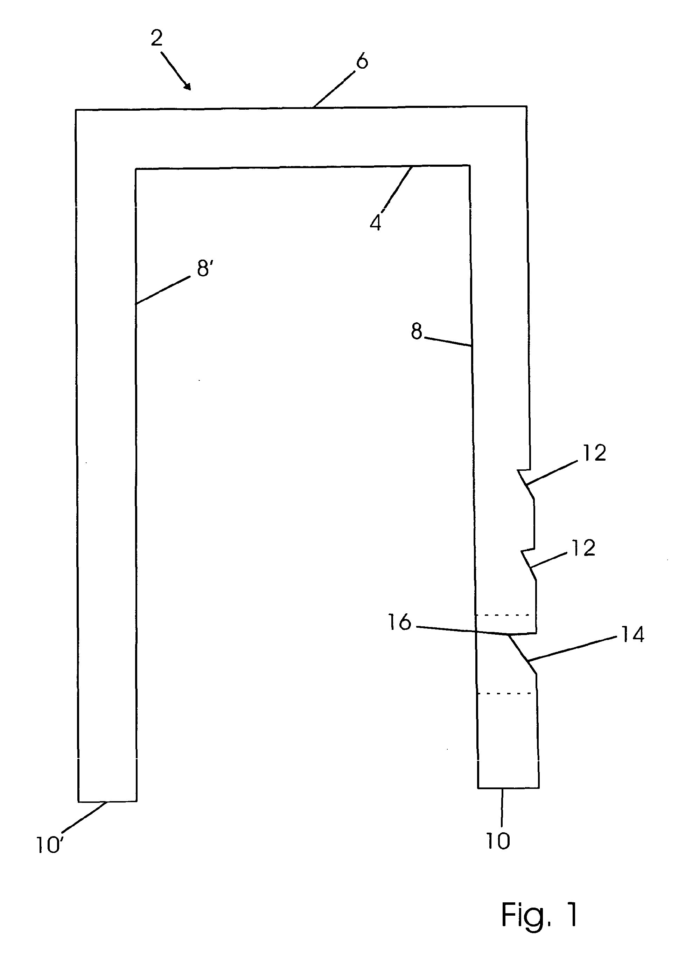

Fig. 1 zeigt einen Kopfstützenträger 2 für Sitze, insbesondere für Fahrzeugsitze. Der Kopfstützenträger 2 besteht aus einem Halterohr 4 aus Metall mit einem Durchmesser von 12 mm und einer Wandstärke von 1 mm. Es ist etwa u-förmig geformt. Es ist dazu ausgelegt, an dem Abschnitt 6, der die beiden Schenkel 8, 8' des U verbindet, eine Kopfstütze (nicht dargestellt) aufzunehmen. Die Kopfstütze wird durch Rasten, Schrauben oder andere bekannte Verbindungen mit dem Kopfstützenträger 2 verbunden. Die freien Enden 10, 10' der Schenkel 8, 8'des Kopfstützenträgers 2 werden in die Sitzlehne eingeführt. Sie verbinden den Sitz, hier einen Fahrzeugsitz, mit der Kopfstütze. Ein Schenkel 8 ist mit Ausnehmungen bzw. Kerben 12, 14 versehen. Diese Kerben 12, 14 sind von unterschiedlicher Form. Eine Reihe von flachen Kerben oder Nuten 12 (Kerbtiefe kleiner als 1 mm) wird zum freien Ende 10 des Schenkels 8 hin mit einer tiefen Kerbe 14 abgeschlossen. Die tiefste Stelle dieser Kerbe, der Kerbgrund 16, ist tiefer als die Stärke der Rohrwand, d.h., größer als 1 mm. Diese Kerbe ist v-förmig ausgeformt und dient zum Verriegeln des Tragelements 2 am Fahrzeugsitz. Das Verriegeln erfolgt durch einen in der Sitzlehne angebrachten Riegel, der durch eine Feder vorgespannt ist, und der in die Kerben 12 oder 14 eingreift. Mit den flachen Kerben 12 kann manuell der Abstand der Kopfstütze zum Fahrzeugsitz eingestellt werden. Die tiefe Kerbe 14 arretiert die Kopfstütze. Der Riegel greift so weit in diese Kerbe ein, dass ein Entriegeln nur möglich ist, indem der Riegel eigens zurückgezogen wird.

Im Bereich der tiefen Kerbe 14 ist im Halterohr 4 eine Hülse 18 angeordnet. Die Hülse 18 ist aus Metall. Sie ist 1,5-mal so lang wie die Kerbe 14, deren Länge 7 mm beträgt. Im Bereich der flachen Kerben 12 sind keine Hülsen 18 oder Pfropfen angeordnet, da die Festigkeit der Rohrwand ausreichend hoch ist, so dass die Kerben 12 die Rohrwand nicht so sehr schwächen, dass es bei hoher Belastung zu Verformungen kommt.

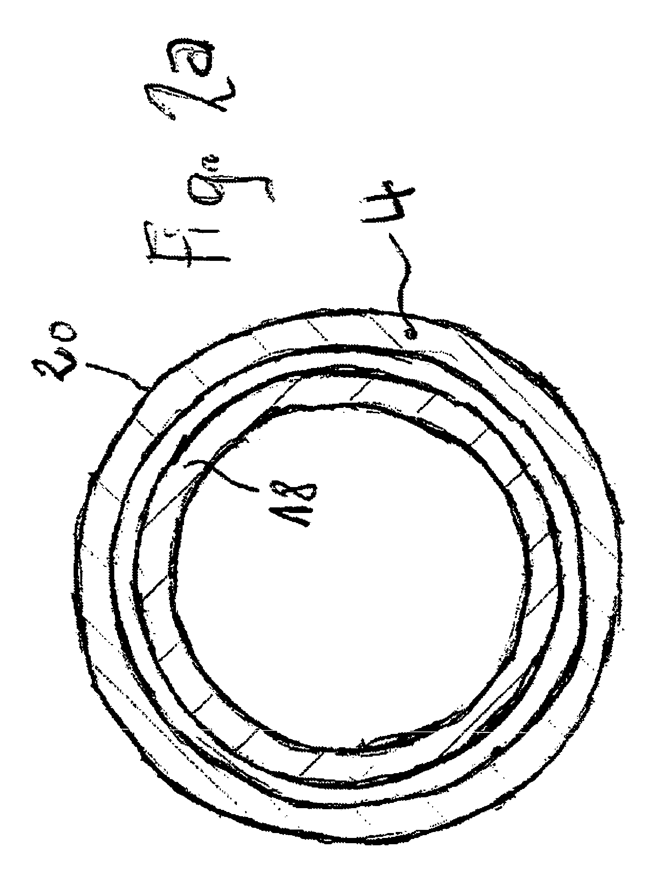

Fig. 2a zeigt in schematischer Darstellung den Querschnitt eines erfindungsgemäßen Kopfstützenträgers 2 gemäß Fig. 1 oberhalb der Kerbe 14. Hier weist das Halterohr 4 eine darin angeordnete Hülse 18 auf. Die Rohrwand 20 hat eine Stärke von 1mm, sie ist aus Metall. Andere Werkstoffe können eingesetzt werden, sofern ihre Festigkeitseigenschaften und ihre Bearbeitungseigenschaften geeignet sind. Da Hülsen 18 vorwiegend dann eingesetzt werden, wenn die Kerben durch spanlose Bearbeitung eingeformt werden, werden Hülsen 18 bevorzugt, die sich durch Prägen verformen lassen.

Die Hülse 18 ist konzentrisch im Halterohr 4 angeordnet. Die Darstellung der Figuren ist nicht maßstäblich; die Passung ist so gewählt, dass die Hülse 18 im Halterohr 4 verschoben werden kann. Die Wandstärke der Hülse 18 beträgt 0,5 mm. Das Material der Hülse 18 weist eine höhere Festigkeit auf als das Material des Halterohres 4. Die Wandstärke der Hülse 18 kann nach den Anforderungen an die Festigkeit und das Gewicht frei gewählt werden. Die Länge der Hülse 18 kann ebenfalls in weiten Grenzen frei gewählt werden. Die Hülse 18 muss dem Bereich der Kerbe mindestens eine solche Festigkeit verleihen, dass die vorgegebene Belastbarkeit gegeben ist. Oft reicht hier das 0,5-fache der Länge der Kerbe. Die Hülse 18 kann ohne Weiteres so lang sein, wie sie in das Halterohr 4 einzuschieben ist. Die Länge der Hülse 18 wird dadurch begrenzt sein, dass die Kosten für das Material und das Gewicht des Kopfstützenträgers 2 möglichst gering gehalten werden sollen. Die Hülse 18 wird oft länger sein als die Kerbe, um die Rohrwand im Bereich des Ansetzens der Kerbe zu stabilisieren. Dies wirkt sich günstig auf die Belastbarkeit aus.

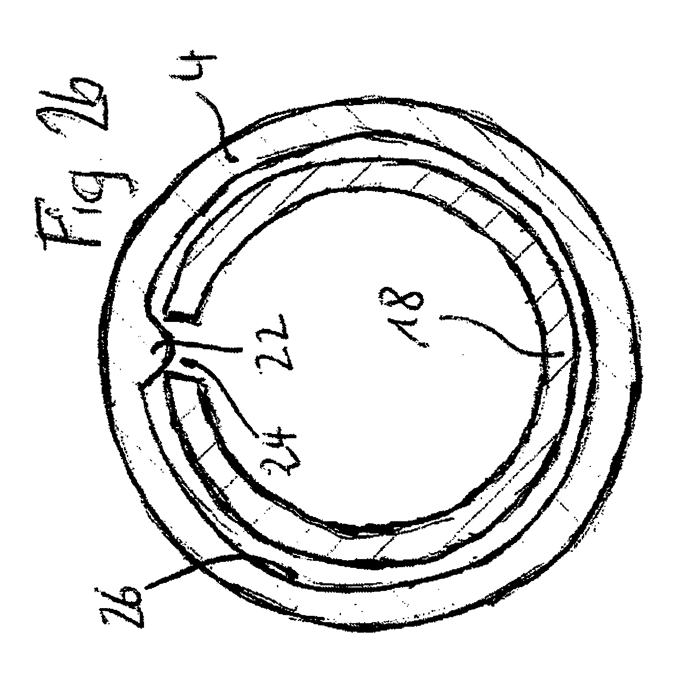

Fig. 2b zeigt eine bevorzugte Ausführung des erfindungsgemäßen Kopfstützenträgers 2. Das Halterohr 4 ist aus einem gerollten, ursprünglich rechteckigen Metallstreifen geformt. Die aneinander stoßenden Kanten wurden dann verschweißt, wodurch sich im Halterohr 4 eine Schweißnaht 22 bildet. Die Schweißnaht ist ca. 0,5 mm breit und ca. 0,3 mm hoch. Bei den bisher bekannten Prägeverfahren musste die Schweißnaht 22 stets in der Nähe der Kerbe oder Nut 12, 14 liegen. Nur dann war es möglich, den Dorn, der beim zweiteiligen Prägewerkzeug das im Halterohr 4 angeordnete Gegenstück zur Matrize bildet, nach dem Herstellen der Ausnehmung 12, 14 durch Drehen wieder aus dem Halterohr 4 zu entfernen.

Wird, so wie in Fig. 2b gezeigt, eine geschlitzte Hülse 18 eingesetzt, ist der Schlitz 24 zweckmäßig im Bereich der Schweißnaht 22 angeordnet. Die Hülse 18 wird dann durch die Schweißnaht 22 geführt. Gleichzeitig wirkt die Hülse 18 bei einem Prägevorgang wie ein Distanzstück. Sie ermöglicht es nun, die Ausnehmung 12, 14 überall dort zu erzeugen, wo sie gewünscht wird. Der Dorn schlägt nach dem Prägen beim Herausfahren aus dem Halterohr 4 nicht mehr an der Schweißnaht 22 an. Also ist ein Ausrichten der Kerbe 12, 14 mit Bezug auf die Schweißnaht 22 nicht mehr erforderlich. Es wird deutlich, dass aus diesem Grund auch zum Erzeugen einer flachen Kerbe 12 eine Hülse 18 sinnvoll eingesetzt werden kann.

Die in Fig. 2b gezeigte geschlitzte Hülse 18 sitzt unter Vorspannung im Halterohr 4. Die Hülse 18 wird aus einer Platine oder einem beliebigen rechteckigen Stück Metall gerollt. Der entstehende Schlitz wird nicht geschlossen wie beim Verschweißen des Halterohres 4. Die Breite des Schlitzes 24 -und damit der Umfang der Hülse 18 - wird größer gewählt als der Innendurchmesser des Halterohres 4. Die Hülse 18 wird vor dem Einbringen in das Halterohr 4 komprimiert, die Breite des Schlitzes 24 wird also verringert, ggf. überlappen die Enden der Hülse 18 einander sogar. Dann wird die Hülse 18 in vorgespannter Stellung in das Halterohr 4 eingeführt, z. B. mit einem Haltewerkzeug oder mit Hilfe des Dorns. Die Hülse 18 wird an der vorgegebenen Stelle im Halterohr 4 freigegeben, sie entspannt sich, bis sie an der Innenwand 26 des Halterohres 4 anliegt. Die Hülse 18 ist jetzt formschlüssig mit dem Halterohr 4 verbunden. Vorteilhaft hierbei ist, dass die Kerbe 12, 14 nicht sofort hergestellt werden muss. Das Halterohr 4 kann ohne weiteres manipuliert werden, z. B. gebogen werden. Die Hülse 18 sitzt fest, das Formen der Ausnehmung 12, 14 kann später erfolgen.

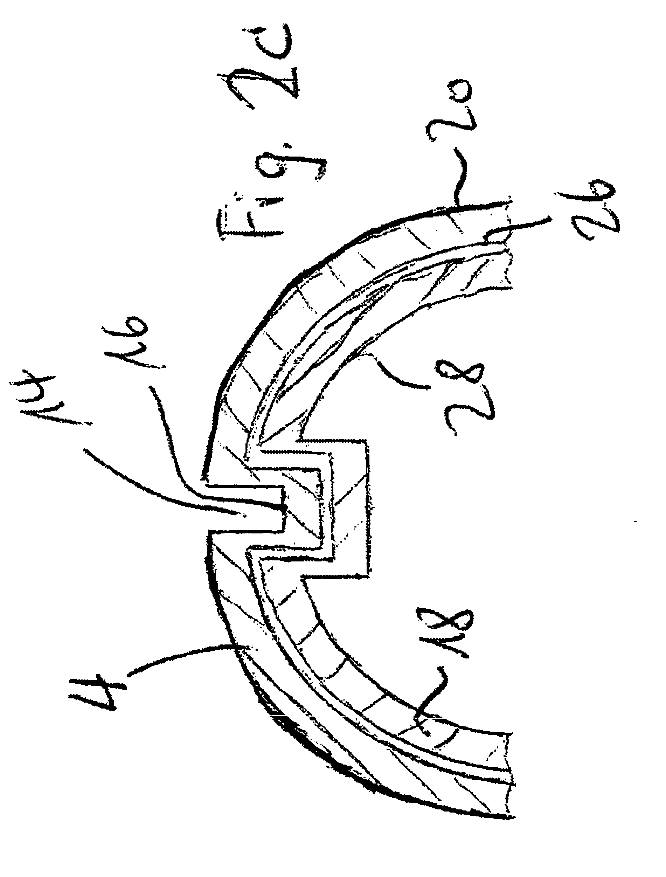

Fig. 2c zeigt einen Ausschnitt eines Halterohres 4 mit einer darin eingesetzten Hülse 18 und einer u-förmigen Kerbe 14. Die Kerbe 14 ist tief eingeformt. Der Kerbgrund 16 liegt tiefer als die Rohrwand 20 und sogar tiefer als die Wandstärke der Hülse 18. Rohrwand 20 und Hülse 18 sind weit verformt und greifen nun ineinander. Ist das Material der Hülse 18 und der Rohrwand ausreichend verformbar, kann eine Kerbe ohne Weiteres so tief ausgeführt werden. Meist liegt die Kerbtiefe jedoch im Bereich der Wandstärke der Hülse 18, so dass die Innenfläche 28 der Hülse 18 nicht verformt wird. Die Gestaltungsfreiheit bei der Ausformung der Kerbe wird im Wesentlichen durch das verwendete Material bestimmt.

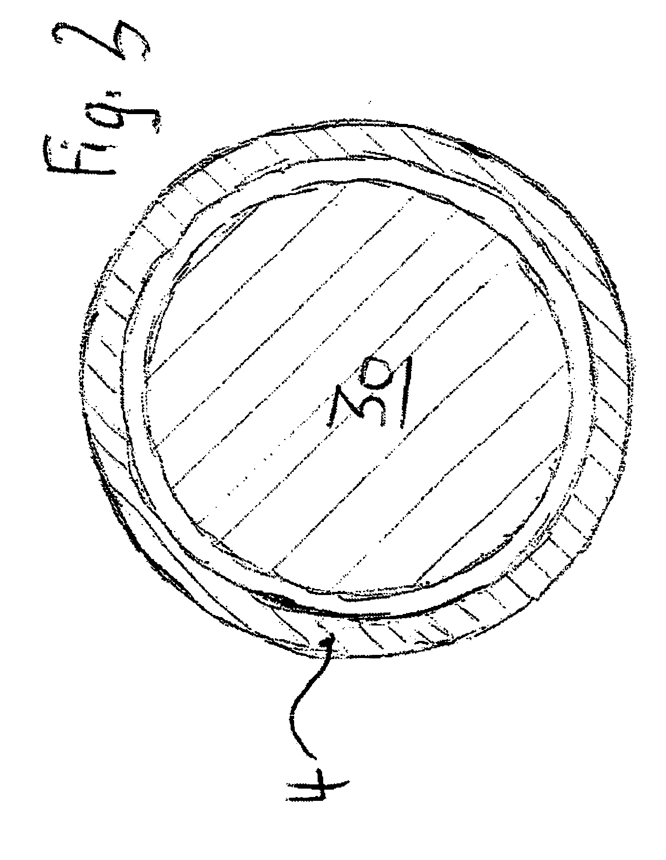

Fig. 3 zeigt ein Halterohr 4 mit einer darin angeordneten dickwandigen, stirnseitig verschlossenen Hülse, mit einem Pfropfen 30. Der Pfropfen ist aus keramischem Material. Da der Pfropfen 30 den Querschnitt des Halterohres 4 weitgehend ausfüllt, ist ein spanloses Erzeugen der Ausnehmung 12, 14 nicht möglich, weil kein Raum zum Komprimieren des Materials verfügbar ist. Außerdem eignet sich das Material nicht zum Verformen. Hier soll aber eine Kerbengeometrie erzeugt werden, die mittels Prägen nicht ausreichend präzise herstellbar ist. Durch spanendes bzw. materialabtragendes Bearbeiten kann hier jedoch die gewünschte Kerbengeometrie geschaffen werden. Spanen, Schleifen oder andere Verfahren zum Abtragen von Material können ohne Weiteres eingesetzt werden. Um ein störungsfreies Bearbeiten zu gewährleisten, kann der Pfropfen im Rohr verklebt werden, entweder indem im Halterohr 4 zunächst Klebeflächen oder -punkte angebracht werden oder indem der Pfropfen beleimt wird.

Nach einer Ausführung, die von der Darstellung in Fig. 3 abweicht, kann ein Pfropfen auch mit einem Schlitz versehen sein, so dass das Einführen und Fixieren des Pfropfens vereinfacht wird.

Vorstehend wurde das Ausrichten des Körpers bzw. der Hülse 18 oder des Pfropfens 30 im Halterohr 4 und das anschließende spanende oder nichtspanende Bearbeiten des Halterohres 4 mit einem Werkzeug zum Herstellen der Ausnehmung 12, 14 beschrieben. Zur Herstellung des erfindungsgemäßen Tragelements 2 fehlt noch das Formen der Mittel zum Aufnehmen der Kopfstütze. Dies erfolgt vor oder nach dem Einbringen des Körpers 18, 30, wahlweise auch vor oder nach dem Formen der Ausnehmung 12, 14. Es geschieht in der Regel durch Biegen des Halterohres 4 in eine annähernd u-förmige Kontur. Alternativ können auch Rohrabschnitte verschweißt werden. Schließlich ist es oft noch erforderlich, das u-förmige Tragelement, insbesondere die Schenkel 8, 8', aus der Ebene der Längsachse des Halterohres 4 herauszubiegen. Wird dann das gepolsterte Kopfteil auf den Kopfstützenträger 2 aufgesetzt, entsteht die Kopfstütze.

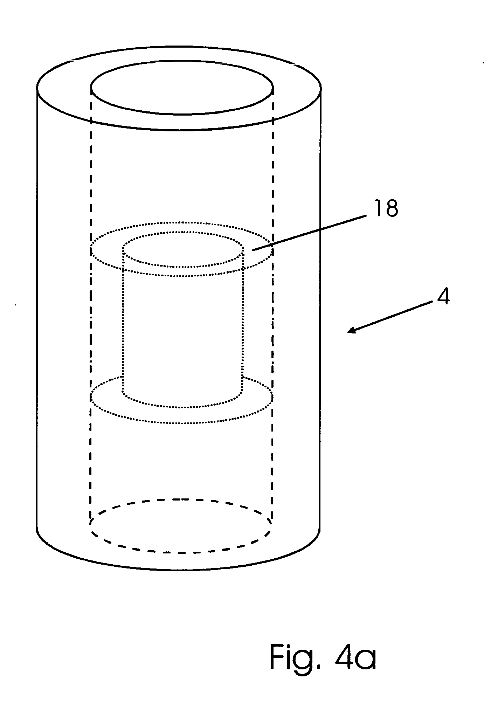

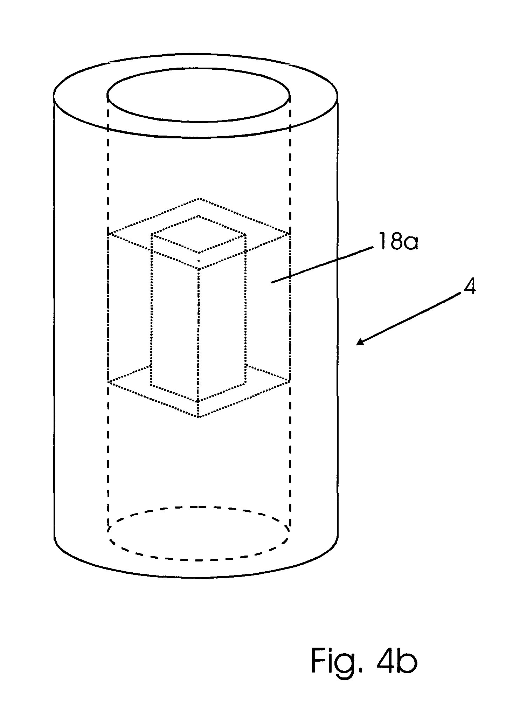

In den Fig. 4a bis 4b ist jeweils ein Abschnitt eines Halterohres 4 mit einem darin angeordneten Verstärkungselement vor einer Umformung des Halterohres 4 dargestellt. Das Verstärkungselement kann, wie in Fig. 4a dargestellt, als Hülse 18 mit einem kreisförmigen Querschnitt ausgebildet sein, wobei der Außenquerschnitt der Hülse 18 an den Innenquerschnitt des Halterohres 4 angepasst ist. Das Verstärkungselement kann aber auch abweichende Ausgestaltungen aufweisen. Eine weitere Ausgestaltung des Verstärkungselements ist in Fig. 4b dargestellt, in der das Verstärkungselement als Hülse 18a mit einem quadratischen Querschnitt ausgebildet ist.

Der erfindungsgemäße Kopfstützenträger ist leichter als aus dem Stand der Technik bekannte Tragelemente. Gleichzeitig ist die Fertigung einfach und flexibel, weil meist schon eine andere Hülse 18 oder ein anderer Pfropfen 30 genügt, wenn ein anderes Tragelement hergestellt werden soll. Das erfindungsgemäß vorgeschlagene Einsetzen eines Verstärkungselements an der Stelle, wo eine Umformung, bspw. eine Ausnehmung einzubringen ist, genügt, um trotz tiefer Kerben eine ausreichende Festigkeit zu gewährleisten, die ein Verformen unter hoher Belastung, z. B. bei einem Aufprall, verhindert.

Es wird ausdrücklich angemerkt, dass die einzelnen Merkmale oder Ausführungen des erfindungsgemäßen Kopfstützenträgers, die hier zum Teil unabhängig voneinander beschrieben wurden, zur Herstellung eines Kopfstützenträgers frei miteinander kombiniert werden können, sowohl einzeln als auch mehrfach. So kann ein Kopfstützenträger beispielsweise sowohl Hülsen als auch Pfropfen aufweisen; diese Verstärkungselemente können auch mehrfach in einem Kopfstützenträger enthalten sein.

## Patentansprüche

1. Kopfstützenträger (2) mit einem Halterohr (4) zur Aufnahme eines Kopfstützelements, wobei innerhalb des Halterohres (4) ein Verstärkungselement angeordnet ist, das durch einen Hohlkörper, insbesondere eine Hülse (18) gebildet ist, **dadurch gekennzeichnet, dass** der Hohlkörper einen sich in dessen Längsachsenrichtung erstreckenden Schlitz (24) aufweist, der mit einer Schweißnaht (22) des Halterohres fluchtet.

2. Kopfstützenträger nach Anspruch 1, **dadurch gekennzeichnet, dass** das Verstärkungselement im Bereich eines umgeformten Abschnitts des Halterohres angeordnet ist.

3. Kopfstützenträger nach einem der vorhergehenden Ansprüche, **dadurch gekennzeichnet, dass** das Verstärkungselement kraft- und/oder formschlüssig mit dem Halterohr verbunden ist.

4. Kopfstützenträger nach einem der vorhergehenden Ansprüche, **dadurch gekennzeichnet, dass** das Verstärkungselement eine an die Form des umgeformten Abschnitts angepasste Form, insbesondere einen an den Querschnitt des umgeformten Bereichs angepassten Querschnitt aufweist.

5. Kopfstützenträger nach einem der vorhergehenden Ansprüche, **dadurch gekennzeichnet, dass** der umgeformte Abschnitt durch spanende und/oder nichtspanende Bearbeitung des Halterohres gebildet ist.

6. Kopfstützenträger nach einem der vorhergehenden Ansprüche, **dadurch gekennzeichnet, dass** das Verstärkungselement in abgeflachten Bereichen des Halterohres und/oder im Bereich von Biegungen, Einkerbungen oder Ausnehmungen angeordnet ist.

7. Kopfstützenträger nach einem der vorhergehenden Ansprüche, **dadurch gekennzeichnet, dass** sich die Umformung zur Herstellung des umgeformten Abschnitts auf das Verstärkungselement erstreckt.

8. Kopfstützenträger nach einem der vorhergehenden Ansprüche, **dadurch gekennzeichnet, dass** das Verstärkungselement aus einem von dem Material des Halterohres abweichenden Material gebildet ist.

## Claims

1. A headrest support (2) having a stay tube (4) for receiving a headrest element, wherein within the stay tube (4) a reinforcing element is disposed that is formed as a hollow body, especially a sleeve (18), **characterized in that** the hollow body has a slit (24) extending in its longitudinal direction, which aligns with a welding seam (22) of the stay tube.

2. The headrest support according to claim 1, **characterized in that** the reinforcing element is disposed in the area of a formed section of the stay tube.

3. The headrest support according to one of the preceding claims, **characterized in that** the reinforcing element is connected force locking and/or form locking to the stay tube.

4. The headrest support according to one of the preceding claims, **characterized in that** the reinforcing element has a shape adapted to the shape of the formed section, particularly, has a cross-section adapted to the cross-section of the formed area.

5. The headrest support according to one of the preceding claims, **characterized in that** the formed section is shaped by cutting machining and/or non-cutting machining of the stay tube.

6. The headrest support according to one of the preceding claims, **characterized in that** the reinforcing element is disposed in flattened areas of the stay tube and/or in areas of bends, notches or recesses.

7. The headrest support according to one of the preceding claims, **characterized in that** the forming for producing the formed section extends to the reinforcing element.

8. The headrest support according to one of the preceding claims, **characterized in that** the reinforcing element is shaped from a material differing from the material of the stay tube.

## Revendications

1. Support d'appuie-tête (2) avec un tube de soutien (4) destiné à recevoir un élément d'appuie-tête, dans lequel, à l'intérieur du tube de soutien (4), est disposé un élément de renforcement qui est formé par un corps creux, en particulier un manchon (18), **caractérisé en ce que** le corps creux présente une fente (24) s'étendant dans sa direction axiale longitudinale, laquelle fente est alignée sur une soudure (22) du tube de soutien.

2. Support d'appuie-tête selon la revendication 1, **caractérisé en ce que** l'élément de renforcement est disposé dans la zone d'un segment formé du tube de soutien.

3. Support d'appuie-tête selon une des revendications précédentes, **caractérisé en ce que** l'élément de renforcement est relié par complémentarité de force et/ou de forme au tube de soutien.

4. Support d'appuie-tête selon une des revendications précédentes, **caractérisé en ce que** l'élément de renforcement présente une forme adaptée à la forme du segment formé, en particulier une section transversale adaptée à la section transversale de la zone formée.

5. Support d'appuie-tête selon une des revendications précédentes, **caractérisé en ce que** le segment formé est façonné par usinage par enlèvement de copeaux et/ou sans enlèvement de copeaux du tube de soutien.

6. Support d'appuie-tête selon une des revendications précédentes, **caractérisé en ce que** l'élément de renforcement est disposé dans des zones aplaties du tube de soutien et/ou dans la zone des courbures, rainures ou évidements.

7. Support d'appuie-tête selon une des revendications précédentes, **caractérisé en ce que** le formage pour fabriquer le segment formé se projette sur l'élément de renforcement.

8. Support d'appuie-tête selon une des revendications précédentes, **caractérisé en ce que** l'élément de renforcement est formé d'un matériau différent du matériau du tube de soutien.
